# EUROPEAN PATENT APPLICATION

(11) **EP 4 787 354 A2**
(43) Date of publication of application: **05.08.2026**
(21) Application number: 26172538.6
(22) Date of filing: 08.11.2022
(51) Int. Cl.: G09F 9/30

(54) **DEFORMABLE DISPLAY DEVICE**

(30) Priority: 06.07.2022 KR 20220083210
(62) Divisional of application: 22950370.1
(71) Applicant: LG Electronics Inc., Yeongdeungpo-gu Seoul 07336 (KR)
(72) Inventor: KANG, Seongbin, 07336 Seoul (KR)
(74) Representative: Vossius & Partner Patentanwälte Rechtsanwälte mbB

(57) **Abstract**

The present invention relates to a display device comprising a fixing unit, a moving unit movably coupled to the fixing unit and configured to transition from a first state to a second state, a driver comprising a motor configured to provide a driving force to move the moving unit, and a display unit coupled to the moving unit and comprising a variable portion that is flat in the first state and changes to a curved state in the second state, characterized in that the moving unit is configured to operate such that an upper part of the display unit moves along a first path, the first path is vertical relative to the fixing unit, and a lower part of the display unit moves along a second path different from the first path, during a transition from the first state to the second state.

## Description

### TECHNICAL FIELD

The present disclosure relates to a deformable display device, and more particularly, to a display device capable of changing positions thereof and being retracted or extended as needed.

### BACKGROUND

A vehicle includes various input and output components as a device for user interfaces. Traditionally, input components have mainly consisted of mechanical parts such as buttons, dials, and levers. However, recently, there has been a growing trend in vehicles adopting more intuitive input methods, such as voice input, touch input, and even gesture input.

A cluster, which includes a dashboard providing information on a vehicle speed, revolutions per minute (RPM), and fuel level, has been used as the most basic output component. However, as display technology improves and vehicle functions become more precise and diversified, more vehicles are being equipped with display units to output various types of information.

In the past, a small liquid crystal display (LCD) for sound output was all that was used, but recently, large display units for displaying navigation and vehicle statuses are being applied to the center fascia between driver and passenger seats. Furthermore, the cluster in the dashboard is no longer needle-based but uses a display, thereby providing various information.

In addition, head-up display (HUD), which projects key information onto a front windshield, has become widespread to allow drivers to check speed or navigation guidance while keeping their eyes on the road.

The display not only outputs information but also includes touch sensors to enable touch input simultaneously. Thus, the display is capable of functioning as both an output and input component. As a result, the size of displays used in vehicles is becoming larger.

However, an instrument panel including the dashboard and center fascia, which is located at the front of the vehicle, may obstruct the front view as the size thereof increases. Additionally, with the advancement of autonomous driving technology, the function of the instrument panel to provide information may become unnecessary or reduced during autonomous driving. Therefore, a larger instrument panel is not always better.

### DISCLOSURE

### TECHNICAL PROBLEM

The present disclosure aims to provide a retractable display device, which is extended when needed and retracted when not in use, capable of reducing the size of an exposed screen

Additionally, the present disclosure aims to provide a display device equipped with a moving unit capable of performing both linear and curved movements simultaneously based on the power of a single motor.

Additionally, the present disclosure aims to enhance the rigidity of a display unit through a non-elastic sheet with a rear support structure capable of preventing reverse bending deformation to prevent damage in a flexible structure.

### TECHNICAL SOLUTION

The present disclosure provides a display device. The display device includes: a fixing unit; a moving unit movably coupled to the fixing unit and configured to transition from a first state to a second state; a driver including a pinion gear and a motor configured to provide a driving force to move the moving unit; and a display unit coupled to the moving unit and moving together with the moving unit, wherein the display unit includes a variable portion that is flat in the first state and changes a curvature to a curved state in the second state. The moving unit includes: a linear moving unit coupled to an upper part of the display unit and configured to move vertically relative to the fixing unit; and a curved moving unit coupled to a lower part of the display unit and configured to protrude forward and downward by moving along a curved path during a transition from the first state to the second state. The driver is configured to provide power to the curved moving unit. The curved moving unit is configured to transfer power to the linear moving unit.

The curved moving unit includes a lower arm coupled to the lower part of the display unit and extending upward, wherein a curved rack gear that engages with the pinion gear is formed on the lower arm. Based on an operation of the pinion gear, an angle of the lower arm changes, and the lower part of the display unit protrudes forward.

A front lower part of the lower arm is coupled to the lower part of the display unit, and a rear side of the lower arm on which the curved rack gear is formed includes a curved surface with a vertical center protruding outward in a rear direction.

The fixing unit includes: a horizontal base fixed to a floor; a vertical base extending vertically from the horizontal base; and a first curved rail formed on the vertical base. The curved moving unit includes: an upper arm coupled to a top of the lower arm; and a first guide protrusion extending from the upper arm and configured to move along the first curved rail.

The first curved rail includes a front first curved rail and a rear first curved rail arranged in front and rear directions, respectively. The first guide protrusion includes a pair of first guide protrusions inserted into the front first curved rail and the rear first curved rail, respectively. A length of the rear first curved rail is greater than a length of the front first curved rail.

The display device includes a first straight rail formed on a front of the vertical base and extending in a vertical direction. The linear moving unit includes: a first front bracket coupled to an upper rear side of the display unit and configured to move vertically along a guide rail formed on the vertical base; and a moving plate coupled to the first front bracket and configured to move vertically.

The display device further includes a second curved rail formed on the moving plate and having a curvature point that protrudes rearward. The upper arm is positioned between the vertical base and the moving plate, and the upper arm includes a second guide protrusion configured to move along the second curved rail.

The second curved rail has a larger curvature than the first curved rail.

The second curved rail includes a front second curved rail and a rear second curved rail arranged in front and rear directions, respectively. The second guide protrusion includes: a front second guide protrusion inserted into the front second curved rail; and a rear second guide protrusion inserted into the rear second curved rail. A length and a curvature radius of the rear second curved rail are greater than a length and a curvature radius of the front second curved rail, respectively.

During the transition from the first state to the second state, after the rear second guide protrusion passes a curvature point of the rear second curved rail, the front second guide protrusion reaches a curvature point of the front second curved rail.

The display device includes: a second straight rail formed on a rear of the vertical base and extending in a vertical direction; and a rear bracket coupled to the moving plate and configured to move vertically along the second straight rail.

The upper arm is rotatably coupled to the lower arm.

A pair of moving units are provided spaced apart in a horizontal direction. The motor is positioned between the pair of moving units, and the pinion gear is coupled to a pair of horizontal shafts extending from both sides of the motor and configured to receive power from the motor

The fixing unit includes: a vertical base extending in a vertical direction; and a side rail formed on a front side of the vertical base, wherein a lower end of the side rail protrudes and extends forward. The display device includes a guide hinge wing portion protruding from a rear side of the variable portion and configured to move along the side rail.

A plurality of guide hinge wing portions are arranged in a vertical direction.

A pair of vertical bases are provided in a horizontal direction. The side rail is formed on opposite sides of the pair of vertical bases. A pair of guide hinge wing portions are formed symmetrically on left and right sides and coupled to a pair of variable portion guide rails.

In the first state, the display unit is in a flat state. In the second state, the display unit is in a curved state in which a height is lowered and the lower part protrudes forward.

### ADVANTAGEOUS EFFECTS

The present disclosure may provide a retractable display device, which is extended when needed and retracted when not in use, capable of reducing the size of an exposed screen

Additionally, since the display device of the present disclosure is capable of changing the shape thereof, the display device may retract and extend a display unit even when a storage space and an extraction direction are misaligned.

Due to a moving module that transmits the power of a motor, a lower curved motion and upper linear motion of the display unit, which are vertically synchronized, may be simultaneously performed through the power of a single motor.

Since the display device maintains rigidity even in a bent state, the display device may allow for touch inputs and prevent reverse deformation, thereby ensuring durability

Effects obtainable from the present disclosure are not limited by the above mentioned effects, and other unmentioned effects can be clearly understood from the above description by those having ordinary skill in the technical field to which the present disclosure pertains.

### BRIEF DESCRIPTION OF THE DRAWINGS

FIG. 1 is a front perspective view showing a first state of a display device according to an embodiment of the present disclosure
FIG. 2 is a front perspective view showing a second state of the display device according to an embodiment of the present disclosure.
FIG. 3 is a rear perspective view showing the first state of the display device according to an embodiment of the present disclosure.
FIG. 4 is a rear view showing the first state of the display device according to an embodiment of the present disclosure.
FIG. 5 is a rear perspective view showing the second state of the display device according to an embodiment of the present disclosure.
FIG. 6 is a rear view showing the second state of the display device according to an embodiment of the present disclosure.
FIG. 7 is a perspective view showing a moving unit of the display device according to an embodiment of the present disclosure.
FIG. 8 is a view showing a rear structure of a display unit of the display device according to an embodiment of the present disclosure.
FIG. 9 is a view showing a side rail and a hinge wing portion of the display device according to an embodiment of the present disclosure.
FIG. 10 is an exploded perspective view of the display unit of the display device and a rear structure thereof according to an embodiment of the present disclosure.
FIG. 11 is a view showing a living hinge of the display device according to an embodiment of the present disclosure.
FIG. 12 is a view showing the living hinge and a non-elastic sheet of the display device according to an embodiment of the present disclosure.
FIG. 13 is a plan view showing the moving unit of the display device according to an embodiment of the present disclosure.
FIG. 14 is a cross-sectional view along line A-A of FIG. 3.
FIG. 15 is a cross-sectional view along line A'-A' of FIG. 4.
FIG. 16 is a cross-sectional view along line B-B FIG. 3.
FIG. 17 is a cross-sectional view along line B'-B' of FIG. 4.
FIGS. 18 to 20 are views showing sliding operations of a linear moving unit and a curved moving unit of the display device according to an embodiment of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents, and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions, or steps, disclosed in the specification, and it is also understood that greater or fewer components, functions, or steps may likewise be utilized.

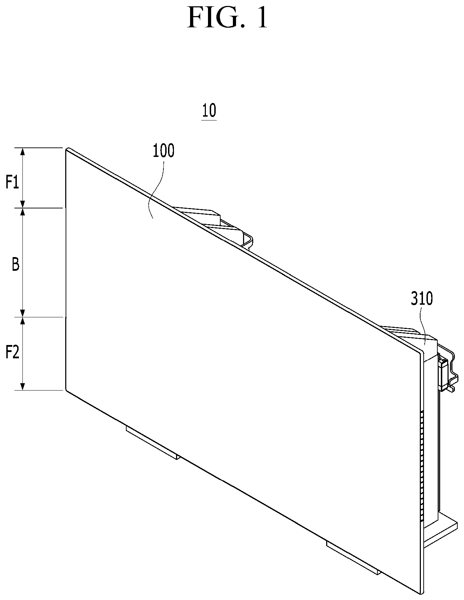

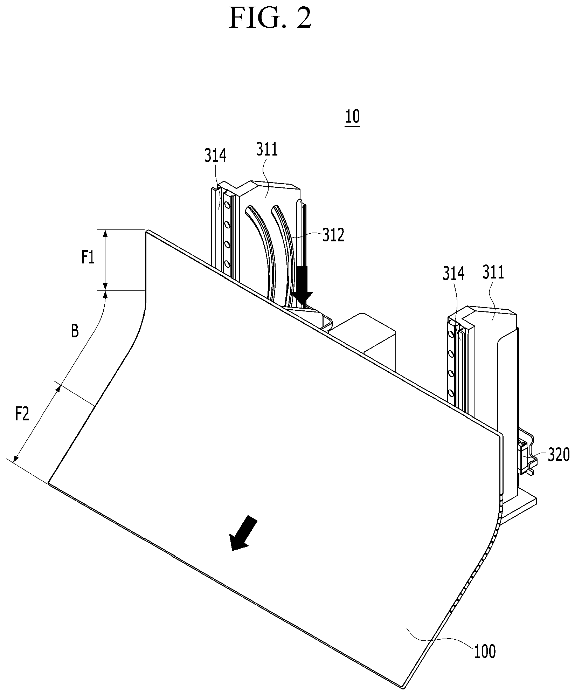

FIG. 1 is a front perspective view showing a first state of a display device 10 according to an embodiment of the present disclosure, and FIG. 2 is a front perspective view showing a second state of the display device 10 according to an embodiment of the present disclosure.

The display device 10 of the present disclosure may be used when a large screen is required in a limited space. The display device 10 of the present disclosure may be installed in locations where space utilization may be enhanced by changing the position of the display device 10 as needed. For example, the display device 10 of the present disclosure may be used as an instrument panel located at the front of a vehicle.

The display device 10 of the present disclosure may transition from a first state in FIG. 1 to a second state in FIG. 2. When transitioning from the first state to the second state, a display unit 100 may move downward and simultaneously transition into a bent or deformed state as shown in FIG. 2.

The display unit 100 may include a display panel on the front and a rear structure that covers the display unit 100 on the back. The display device 10 may include: a fixing unit 310 that secures the display device 10 to a vehicle or a specific location; and a driver 330 and moving unit that are attached to the rear structure of the display unit 100 and changes the position and shape of the display unit 100.

The display panel may display graphic objects corresponding to various types of information. The display panel may include at least one of a liquid crystal display (LCD), a thin film transistor-liquid crystal display (TFT LCD), an organic light-emitting diode (OLED), a flexible display, a three-dimensional (3D) display, or an electronic ink (e-ink) display. The display panel may form a layered structure or be integrated with a touch input unit 213, thereby implementing a touch screen.

A flexible display such as an OLED may be used to achieve the bending deformation shown in FIG. 2. Even when a flexible display panel is used, it may be challenging to maintain rigidity if all parts undergo bending deformation. Therefore, as shown in FIG. 2, some parts may be designated as a variable portion B where bending occurs, while the upper and lower sides of the variable portion B may include flat portions F1 and F2.

If the entirety of the display unit 100 undergoes curvature changes, it is difficult to couple the display unit 100 with moving units 320 and 340 for the deformation and position change of the display unit 100 as shown in FIG. 2. Additionally, due to the flexible structure, the degree of freedom in shape changes increases, and as a result, there is a risk of deformation into unintended shapes.

Based on the variable portion B, the upper flat portion F1 moves only in the vertical direction, while the lower flat portion F2 moves downward and simultaneously protrudes forward at an angle. The movement directions of the upper flat portion F1 and the lower flat portion F2 differ, which causes the curvature of the variable portion B, located between the upper flat portion F1 and the lower flat portion F2, to change.

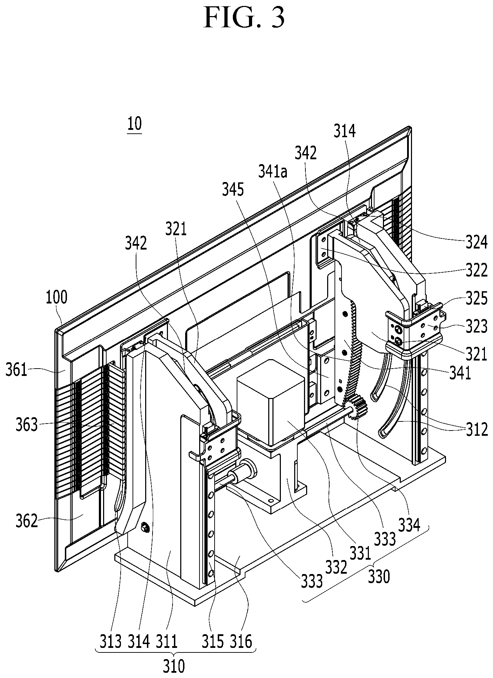

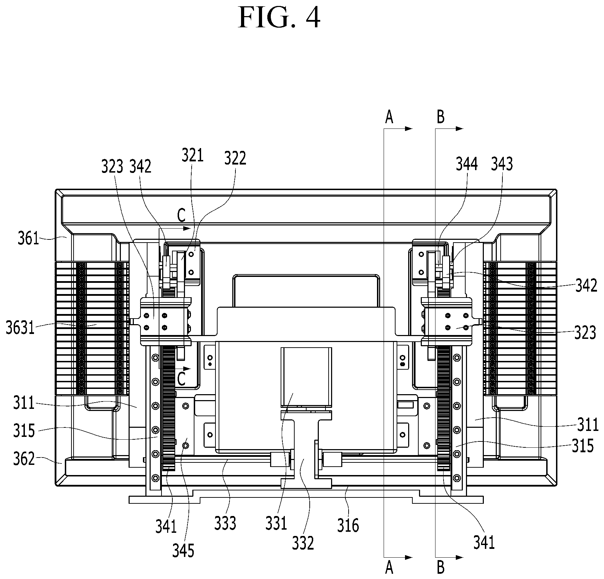

FIG. 3 is a rear perspective view showing the first state of the display device 10 according to an embodiment of the present disclosure, and FIG. 4 is a rear view showing the first state of the display device 10 according to an embodiment of the present disclosure.

There is a structure for supporting and supporting the position and shape of the display unit 100 on the rear side of the display unit 100 of the display device 10 of the present disclosure,

To this end, the fixing unit 310, the moving unit, and the driver 330 may be included. The fixing unit 310 is a component that secures the display device 10 to a vehicle or other structure. The driver 330 is located within the fixing unit 310 and provides power to move the moving unit relative to the fixing unit 310.

The moving unit is a component that moves by receiving power from the driver 330. The moving unit is coupled to the flat portions F1 and F2 of the display unit 100 and guides the movement and deformation of the display unit 100. The moving unit may include a linear moving unit 320, which is coupled to the upper flat portion F1, and a curved moving unit 340, which is coupled to the lower flat portion F2.

The fixing unit 310 may include a horizontal base 316 that is fixed to the ground and a vertical base 311 that extends vertically from the horizontal base 316. The vertical base 311 may have rails 312, 314, and 315 formed thereon to allow the moving units 320 and 340 to slide. The moving units 320 and 340 may move relative to the vertical base 311, thereby changing the position of the display unit 100.

As shown in FIG. 3, the vertical base 311 may be provided in a pair on both the left and right sides, and accordingly, the moving units 320 and 340 may also be provided as a pair on both sides. Due to the pair of moving units 320 and 340 on the left and right sides, the display unit 100 may move stably without shaking.

The moving unit may include the linear moving unit 320 that moves the upper flat portion F1 of the display unit 100 in the vertical direction and the curved moving unit 340 that guides the lower flat portion F2 of the display unit 100 to move downward while protruding forward as the lower flat portion F2 moves.

The linear moving unit 320 moves up and down along a straight rail formed on the vertical base 311, while the curved moving unit 340 may move along a curved rail.

The vertical base 311 includes a straight rail extending in the vertical direction, which may include a first straight rail 314 positioned at the front of the vertical base 311 as shown in FIG. 2 and a second straight rail 315 positioned at the rear of the vertical base 311 as shown in FIG. 3. While a straight rail may be provided on only one side, a pair of rails may be provided at both the front and rear to support the weight of the display unit 100 and ensure movement without twisting,

The linear moving unit 320 may include a first guide block 324 that moves along the first straight rail 314 formed on the vertical base 311 and a second guide block 325 that moves along the second straight rail 315.

The first guide block 324 may be fastened to a first front bracket 322, and the second guide block 325 may be fastened to a rear bracket 323. To ensure that the first guide block 324 and the second guide block 325 move simultaneously, a moving plate 321 may be provided between the first front bracket 322 and the rear bracket 323.

The moving plate 321 may be positioned on the inner sides of the pair of vertical bases 311, which faces each other, as shown in FIG. 3. The moving plate 321 may be arranged at a predetermined distance from the vertical base 311.

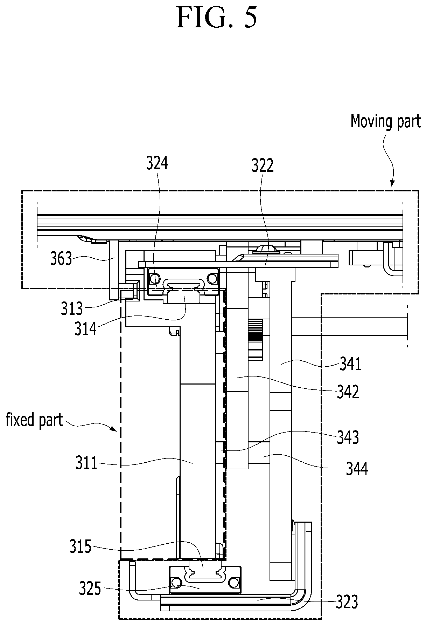

FIG. 5 is a plan view showing the moving unit of the display device 10 according to an embodiment of the present disclosure. The moving plate 321 is not directly connected to the straight rails 314 and 315 but is instead coupled using the first front bracket 322 and the rear bracket 323, thereby allowing a space to be formed between the moving plate 321 and the vertical base 311.

As shown in FIG. 5, the curved moving unit 340 may be positioned between the vertical base 311 and the moving plate 321. The curved moving unit 340 may include a lower arm 341 that extends upward and whose lower part is connected to the rear side of the lower flat portion F2. The lower part of the lower arm 341 is connected to the lower flat portion F2 through a second front bracket 345.

The curved moving unit 340 may further include an upper arm 342 located above the lower arm 341. The upper arm 342 may include guide protrusions 343 and 344 that move along curved rails 312 and 326.

The lower arm 341 receives power from the driver 330 to push the lower flat portion F2 forward. As the guide protrusions 343 and 344 of the upper arm 342 move along the curved rails 312 and 326, the movement path of the curved moving unit 340 may be configured. To receive power from the driver 330, the lower arm 341 may include a curved rack gear 341a located in the rear direction.

In FIG. 5, a fixed part corresponds to the fixing unit 310, and the moving part may include the moving units 320 and 340 as well as the display unit 100, which moves together with the moving units 320 and 340.

The driver 330, which provides power to the moving units 320 and 340, may include a motor 331 and a pinion gear 334 that transmits the power of the motor 331. The motor 331 may be fixed on the horizontal base 316. As shown in FIG. 3, to transmit power to the pair of left and right symmetrically arranged moving units 320 and 340, a horizontal shaft 333 may be included to transmit the power of a single motor 331 to both the left and right sides.

If two motors 331 are used, the cost of components increases. Thus, it is preferable to use a single motor 331 to synchronize the operation of the pair of moving units 320 and 340. As shown in FIG. 4, the motor 331 is positioned between a pair of vertical bases 311, and the horizontal shaft 333 extends in the left-right direction. Pinion gears 334 are attached to each end of the horizontal shaft 333.

To distribute the power from the motor 331 to a pair of horizontal shafts 333 and to change the rotation direction of the motor 331, multiple gears may be used. A gearbox 332, which houses these gears, may be positioned below the motor 331.

The pinion gear 334 engages with a curved rack gear 341a formed on the lower arm 341 of the curved moving unit 340. When the pinion gear 334 rotates, the curved rack gear 341a may move along a curved path. The rear side of the lower arm 341, where the curved rack gear 341a is formed, protrudes outward in a convex shape, and thus the curved rack gear 341a may move along a curved path, rather than a straight line, when the pinion gear 334 rotates.

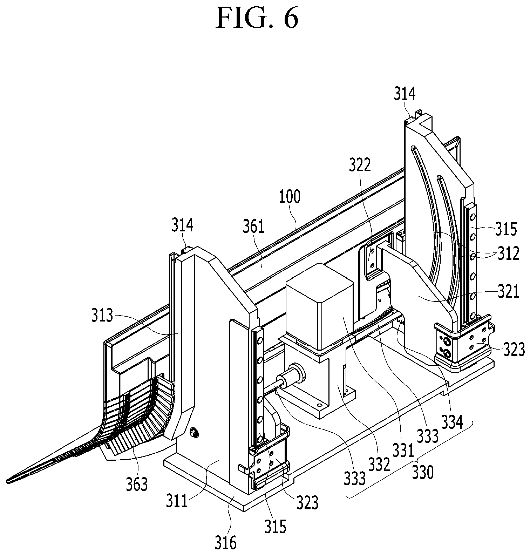

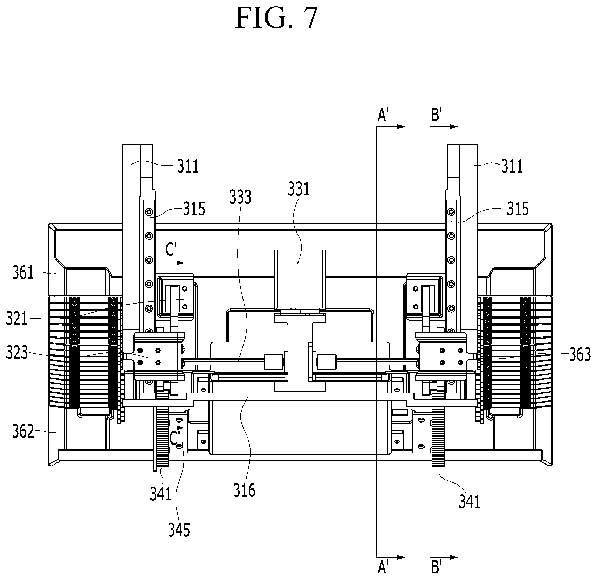

FIG. 6 is a rear perspective view showing the second state of the display device 10 according to an embodiment of the present disclosure, and FIG. 7 is a rear view showing the second state of the display device 10 according to an embodiment of the present disclosure.

When the driver 330 operates and transitions from the first state to the second state, the curved moving unit 340 pushes a lower part of the display unit 100 forward. On the other hand, the upper flat portion F1 of the display unit 100, which is coupled to the linear moving unit 320, moves vertically, independent of the lower flat portion F2, while maintaining the forward-facing direction.

As shown in FIG. 7, the lower flat portion F2 of the display unit 100 moves below the horizontal base 316 and, as shown in FIG. 6, the lower flat portion F2 may protrude forward. The variable portion B bends to form a curve, and the rear structure of the display unit 100 located at the rear side of the variable portion B may include a living hinge 365 to allow vertical bending deformation.

The living hinge 365 may be formed by attaching individual bar-shaped members, which are long in the horizontal direction and arranged vertically or by forming grooves 3652 that extend horizontally on the rear of an elastic member.

Although the upper flat portion F1 and the lower flat portion F2 are coupled to the moving units 320 and 340, it is difficult to provide a bracket that may be fastened to the moving units 320 and 340 because the shape of the variable portion B changes. The variable portion B is not coupled to the moving units 320 and 340. However, as shown in FIG. 6, the variable portion B may be fastened to a side rail 313 that guides the movement, and thus, the variable portion B may move along a predefined curved path by following the curved rails 312 and 326.

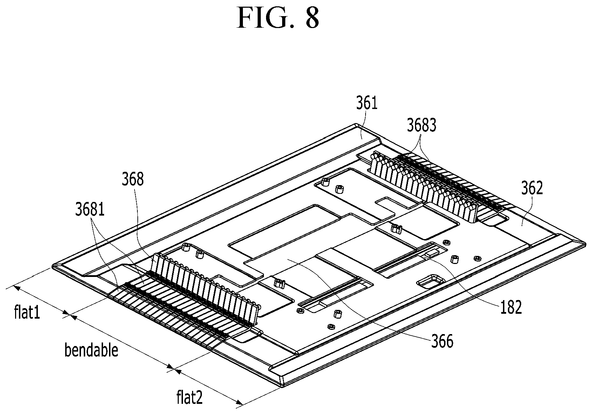

FIG. 8 is a view showing the rear structure of the display unit 100 of the display device 10 according to an embodiment of the present disclosure. As described above, the display unit 100 of the present disclosure may include the upper flat portion F1, the variable portion B, and the lower flat portion F2. The upper flat portion F1 and the lower flat portion F2 may be coupled with rigid backplates 361 and 362.

The backplate is divided into a first backplate 361, which is attached to the upper flat portion F1, and a second backplate 362, which is attached to the lower flat portion F2. In the area corresponding to the variable portion B, a solid backplate is omitted to allow for bending deformation, and the living hinge 365 may be positioned instead.

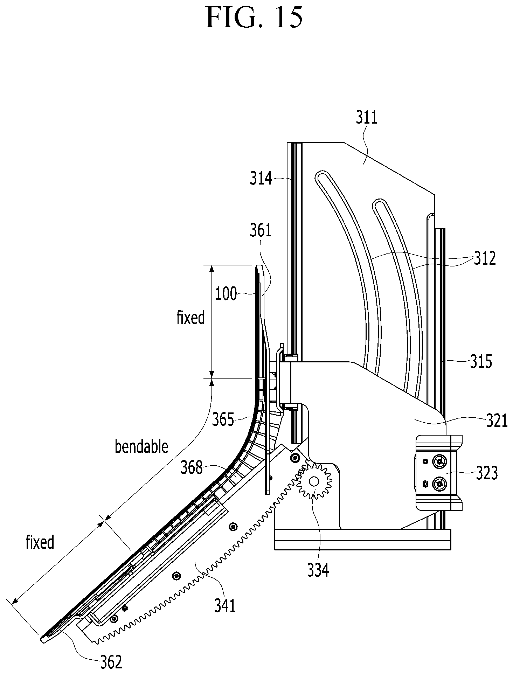

The backplates 361 and 362 may include extension portions 361a and 362a that extend toward the variable portion B. The extension portions 361a and 362a are not attached to the display unit 100, and thus, the extension portions 361a and 362a may be spaced apart from the rear side of the display unit 100 when the variable portion B is bent in the second state (see FIG. 15).

The extension portion 361a of the first backplate 361 and the extension portion 362a of the second backplate 362 may meet at the ends thereof in the middle of the variable portion B such that the extension portion 361a and the extension portion 362a do not overlap with each other.

When the motor 331 operates in the first state and the curved moving unit 340 moves downward and forward, the upper part of the extension portion 362a of the second backplate 362, located at the lower section, first separates from the rear side of the display unit 100. Thereafter, the lower part of the extension portion 361a of the first backplate 361 separates from the rear side of the display unit 100.

As the display unit 100 moves downward, the curved surface of the lower part of the variable portion B flattens out, which may cause the gap between the second backplate 362 and the display panel 151 to decrease as shown in FIG. 15.

The living hinge 365 may be covered by the extension portions 361a and 362a, and a hinge wing portion 368 for guiding the movement path of the variable portion B may protrude from the rear side of the living hinge 365 as shown in FIG. 8.

The hinge wing portion 368 may be made of metal to ensure rigidity and may include a wing fixing part 3681 that covers the rear side of the living hinge 365 to secure the hinge wing portion 368 to the living hinge 365.

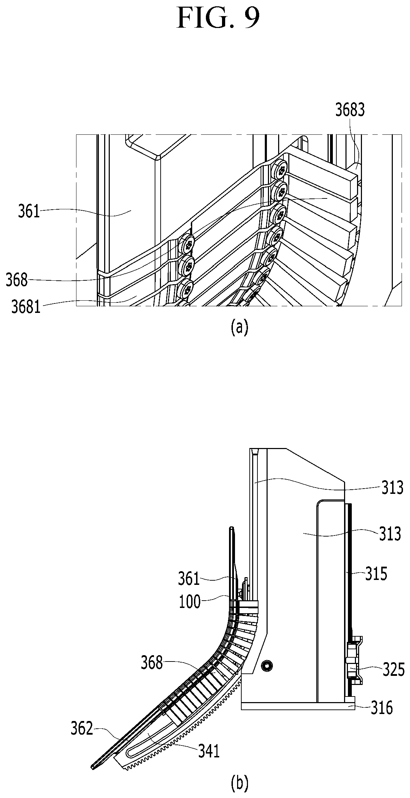

FIG. 9 is a view showing the side rail 313 and the hinge wing portion 368 of the display device 10 according to an embodiment of the present disclosure. FIG. 9(a) is an enlarged view of a third guide protrusion 3683 inserted into the side rail 313, and FIG. 9(b) is a side view showing the second state.

As shown in FIG. 9(a), the hinge wing portion 368 may include the third guide protrusion 3683 that is inserted into the side rail 313 to move along the side rail 313 formed on the lateral side of the vertical base 311.

As shown in FIG. 9(b), the side rail 313 may have a straight vertical section at the upper part and a curved section that bends forward at the lower part. In the first state, the third guide protrusion 3683 of the hinge wing portion 368 is positioned in the upper straight section of the side rail 313. However, when transitioning to the second state, the third guide protrusion 3683 moves along the curved section of the side rail 313, and the lower part of the display may protrude as shown in FIG. 9(b).

The hinge wing portion 368 may be arranged symmetrically on both the left and right sides as shown in FIG. 8. In this case, the third guide protrusions 3683 may be positioned to face each other.

Since the hinge wing portion 368 is made of a rigid material, the extension portions 361a and 362a are omitted in the area where the wing fixing part 3681 of the hinge wing portion 368 is located. As a result, the extension portions 361a and 362a are positioned only between the hinge wing portions 368.

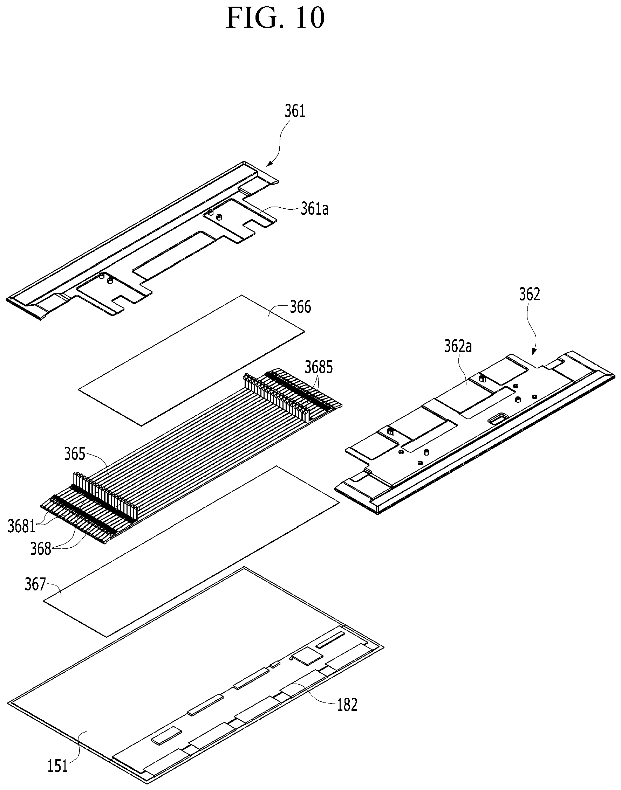

FIG. 10 is an exploded perspective view of the display panel 151 and the rear structure thereof according to an embodiment of the present disclosure. The display unit 100 may include the display panel 151, the living hinge 365 located on the rear side of the display panel 151, and the backplates 351 and 352. The living hinge 365 may include a front sheet 367 for attachment to the display panel 151 and a non-elastic sheet 366 that covers the grooves 3652 on the rear side of the living hinge 365. The non-elastic sheet 366 serves to configure the limits of the curvature change in the variable portion B.

As described above, the externally exposed hinge wing portions 368 may be positioned on the left and right sides of the rear side of the living hinge 365. A portion that overlaps with the extension portions 361a and 362a of the backplate may be covered by the non-elastic sheet 366.

A panel substrate 182, which controls the operation of the display panel 151, may be located at the lower part of the display panel 151. As shown in FIG. 8, to connect the panel substrate 182 with a main substrate, the second backplate 362 may include an opening that partially exposes the panel substrate.

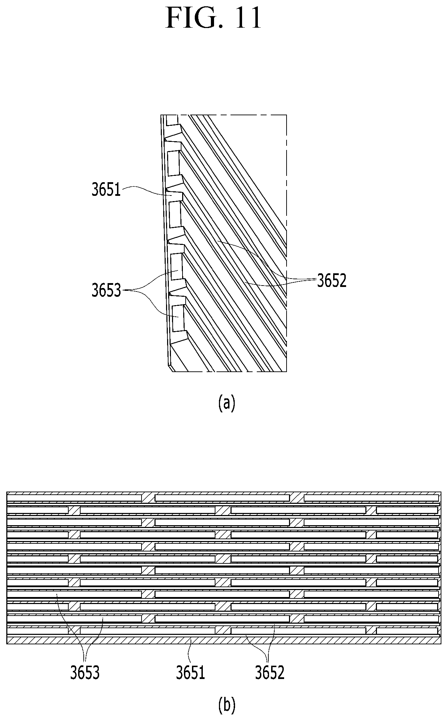

FIG. 11 is a view showing the living hinge 365 of the display device 10 according to an embodiment of the present disclosure. The living hinge 365 is configured with an elastic material 3651 to allow bending deformation and may have a predetermined thickness to provide rigidity, which is to support the rear side of the flexible display panel 151.

However, if the thickness of the living hinge 365 is too great, it becomes difficult to achieve bending deformation. To facilitate forward bending, the living hinge 365 may include the grooves 3652 extending horizontally on the rear side. As shown in FIG. 11, the grooves 3652 may be cut in a V-shape.

The grooves 3652 are arranged in parallel in the vertical direction, and the cross-sections between the grooves 3652 form a trapezoidal bar shape. To enhance the rigidity of the living hinge 365, rigid ribs 3653 may be inserted between the multiple grooves 3652. The rigid ribs 3653 may include a metal material. The rigid ribs 3653 may either be inserted into grooves formed in the elastic material 3651 of the living hinge 365, or the rigid ribs 3653 may be integrally formed with the elastic material 3651 using a double injection molding process.

The rigid ribs 3653 may have a length corresponding to the horizontal length of the display panel 151. However, as shown in FIG. 11(b), multiple rigid ribs 3653 cut to a predetermined length may be arranged horizontally. If the ends of the rigid ribs 3653 are staggered in relation to neighboring rigid ribs 3653 in the vertical direction, it increases the degree of freedom for length changes in the vertical direction, thereby allowing for smoother bending deformation of the display panel 151.

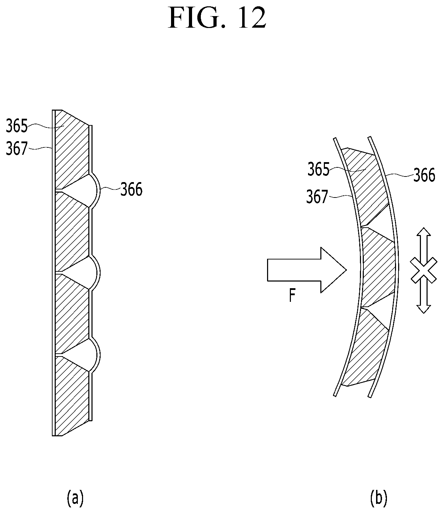

FIG. 12 is a view showing the living hinge 365, front sheet 367, and non-elastic sheet 366 of the display device 10 according to an embodiment of the present disclosure. FIG. 12(a) illustrates the first state where the variable portion B is flat, and FIG. 12(b) illustrates the second state where the variable portion B bends and forms a curved surface.

Since the living hinge 365 has a predetermined thickness, there is a difference in curvature radius between the front and rear sides of the living hinge 365. Since the display panel 151 is attached to the front side of the living hinge 365, the length change on the rear side of the living hinge 365 is greater than the length change on the front side during deformation.

The front sheet 367 may be coupled to the display panel 151 and be adhesive. The front sheet 367 undergoes little to no deformation or may expand slightly. Since the living hinge 365 undergoes significant deformation, the length change of the non-elastic sheet 366 located on the rear side needs to be substantial.

Therefore, although a highly elastic material may be used for the sheet located on the rear side of the living hinge 365, the use of the non-elastic sheet 366 which does not change in length may limit the maximum bending curvature.

As shown in FIG. 12(b), the vertical length of the non-elastic sheet 366 is determined based on the curvature of the second state, and the non-elastic sheet 366 is tightly attached to the rear side of the living hinge 365 when the variable portion B is in the bent state.

In this case, the grooves 3652 are not adhered to the non-elastic sheet 366. That is, the non-elastic sheet 366 is attached only to bars (rigid ribs 3653) between the grooves 3652. When transitioning to the first state as shown in FIG. 12(a), the width of the grooves 3652 on the rear side of the living hinge 365 narrows. As a result, portions of the non-elastic sheet 366 that correspond to the unadhered grooves 3652 may protrude in the rear direction or be drawn into the spaces between the grooves 3652.

When transitioning back to the second state, even if force is applied from the front to further increase the curvature of the variable portion B, the non-elastic sheet 366 does not stretch, thereby supporting the variable portion B and preventing the variable portion B from bending further.

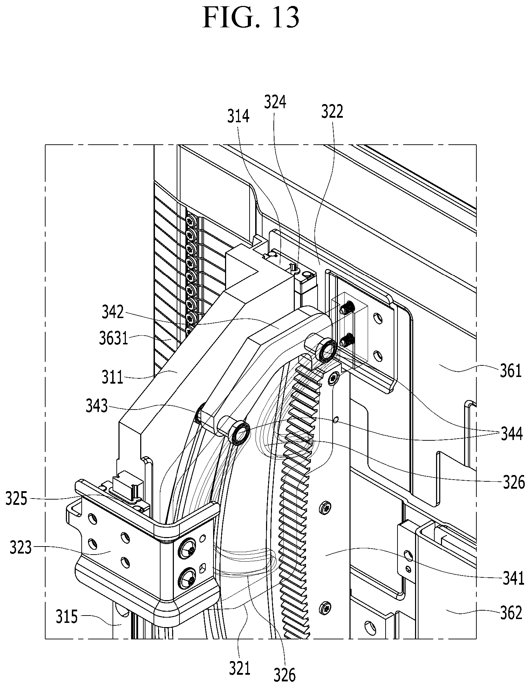

FIG. 13 is a plan view showing the moving units 320 and 340 of the display device 10 according to an embodiment of the present disclosure. FIG. 13 illustrates the vertical base 311 of the fixing unit 310, the moving plate 321 of the linear moving unit 320, and the first front bracket 322 and the rear bracket 323. The curved moving unit 340 may include the lower arm 341 with the curved rack gear 341a formed on the rear side and the upper arm 342 that is rotatably coupled to the upper part of the lower arm 341.

The curved moving unit 340 is positioned in the space between the moving plate 321 and the vertical base 311. The curved rails 312 and 326 are formed on both the vertical base 311 and the moving plate 321, and the curved rails 312 and 326 extend toward the upper arm 342. The upper arm 342 of the curved moving unit 340 is simultaneously coupled to both the vertical base 311 and the moving plate 321, using the guide protrusions 343 and 344 that extend on both sides

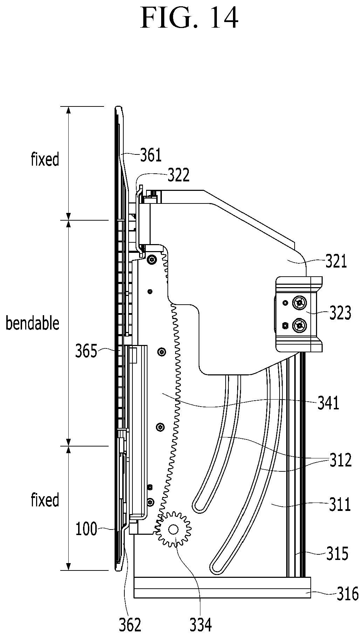

FIG. 14 is a cross-sectional view along line A-A of FIG. 3, and FIG. 15 is a cross-sectional view along line A'-A' of FIG. 4. FIGS. 14 and 15 are views from the outside of the moving plate 321. When the motor 331 operates and the pinion gear 334 rotates, the pinion gear 334 pushes the curved rack gear 341a forward and downward, and the lower flat portion F2 protrudes forward and downward as shown in FIG. 15.

As the lower flat portion F2 moves downward, the variable portion B and the upper flat portion F1 are also pulled downward. As a result, the linear moving unit 320 may also move downward as shown in FIG. 15.

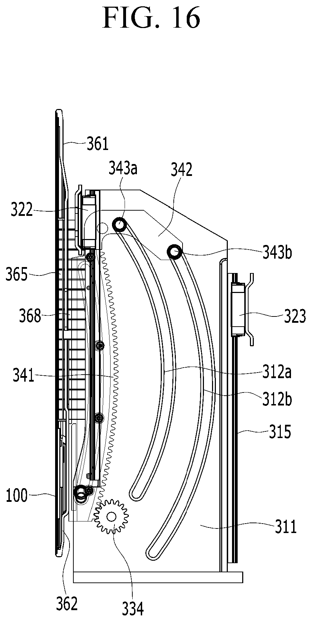

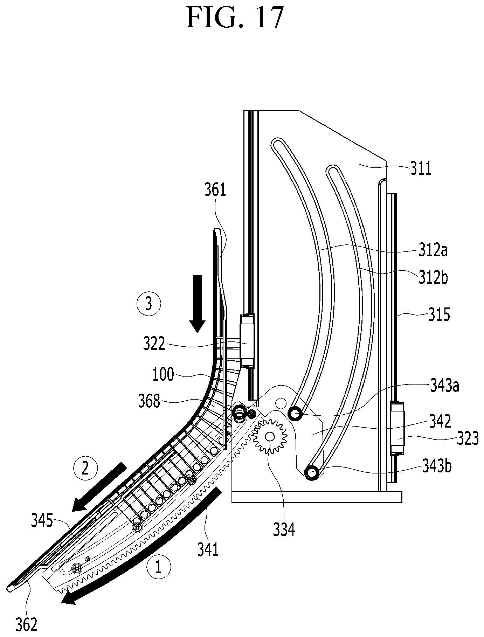

FIG. 16 is a cross-sectional view along line B-B FIG. 3, and FIG. 17 is a cross-sectional view along line B'-B' of FIG. 4. FIGS. 16 and 17 are views of the upper arm 342 from inside the moving plate 321. FIGS. 16 and 17 illustrate the first curved rail 312 formed on the vertical base 311. A first guide protrusion 343 formed on the upper arm 342 may be inserted into the first curved rail 312 to facilitate movement. The first curved rail 312 serves the purpose of guiding the movement direction of the curved moving unit 340.

As shown in FIGS. 16 and 17, a pair of first curved rails 312 may be arranged in the front and rear directions. The rear first curved rail 312b, which is positioned behind the front first curved rail 312a, may be longer. This is because the curved moving unit 340 rotates along a curved path, and the rotation radius of the rear first guide protrusion 343b located at the end of the upper arm 342 is larger, resulting in a longer travel distance.

In FIG. 17, the angle of the upper arm 342 is tilted such that the rear side is positioned lower than that in FIG. 16. Additionally, the positions of the lower ends of the pair of first curved rails 312 may differ from those of the upper ends thereof.

When the curved moving unit 340 moves forward and downward (①), the lower flat portion F2 moves downward (②), and consequently, the variable portion B and the upper flat portion F1 also move downward (③). The driving force of the upper flat portion F1 and the linear moving unit 320 is transmitted through the display unit 100, which places a load on the display unit 100 and may potentially lead to damage to the display panel. Additionally, during the transition from the second state to the first state, the linear moving unit 320 needs to be pushed upward, which makes the transmission of the driving force of the motor 331 less efficient, compared to the transition from the first state to the second state.

Accordingly, the curved moving unit 340 and the linear moving unit 320 may be directly connected such that the driving force applied to the curved moving unit 340 is transferred to the linear moving unit 320. To this end, a second curved rail 326 may be formed on the moving plate 321, and the upper arm 342 may further include a second guide protrusion 344 that is inserted into the second curved rail 326. The second guide protrusion 344 may be formed on the opposite side of the first guide protrusion 343.

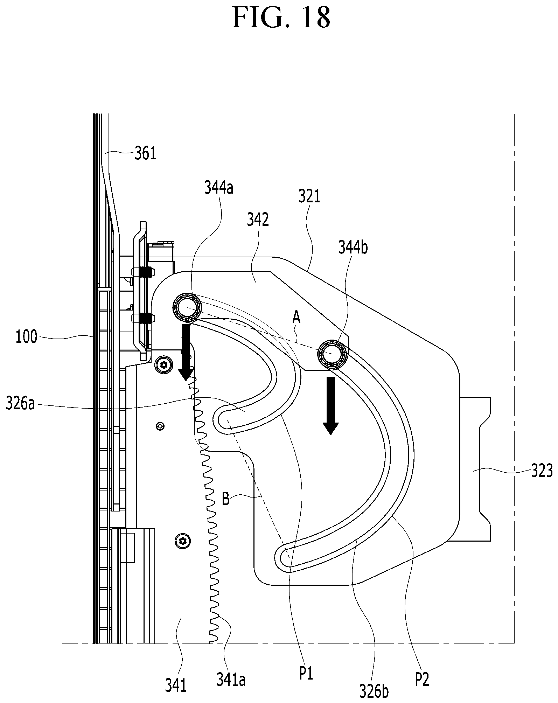

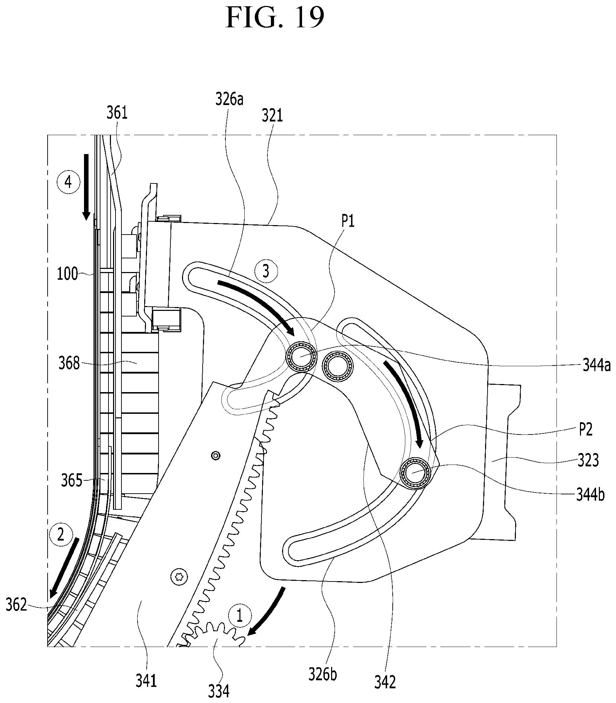

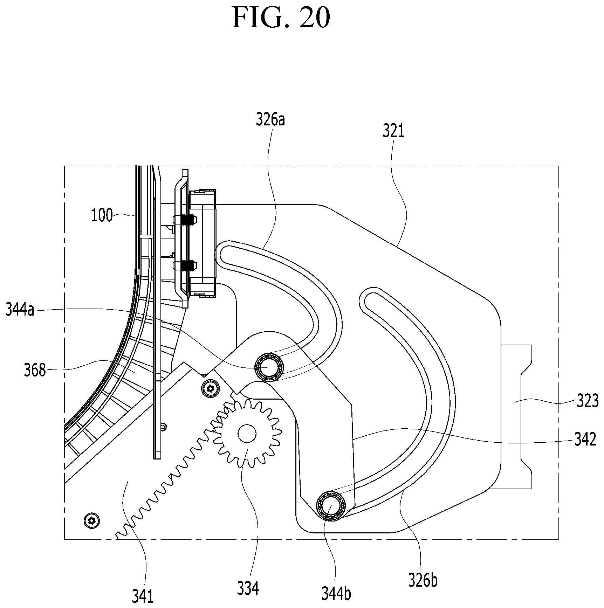

FIGS. 18 to 20 illustrate the sliding operation of the linear moving unit 320 and the curved moving unit 340 of the display device 10 according to an embodiment of the present disclosure. FIG. 18 is a cross-sectional view along line C-C of FIG. 4. FIG. 20 is a cross-sectional view along line C'-C' of FIG. 7. FIG. 19 is a cross-sectional view showing the linear moving unit 320 and the curved moving unit 340 in an intermediate position between the first and second states.

The upper arm 342, which is connected to the top of the lower arm 341, is fastened to the moving plate 321 of the linear moving unit 320 through the second guide protrusion 344 and the second curved rail 326. As a result, the upper arm 342 may transfer the force that pulls the moving plate 321 downward.

However, the curved moving unit 340 moves along a curved path while the linear moving unit 320 moves in a straight line in the vertical direction. Thus, the second curved rail 326 may be designed to offset the horizontal movement of the curved moving unit 340, which follows a curved path, and to transfer the vertical force to the moving plate 321.

As shown in FIG. 18, a pair of second curved rails 326 may include a front second curved rail 326a located at the front and a rear second curved rail 326b located at the rear. The second guide protrusion 344 formed on the upper arm 342 may also include a front second guide protrusion 344a that moves along the front second curved rail 326a and a rear second guide protrusion 344b that moves along the rear second curved rail 326b.

Since the curved moving unit 340 rotates and moves, the tilt angle of the upper arm 342 differs between the first and second states, as shown in FIGS. 18 and 20. In the second state, as the curved moving unit 340 tilts forward and protrudes, the upper arm 342, which forms the upper part of the curved moving unit 340, tilts more steeply in the vertical direction, compared to the first state.

Therefore, depending on the change in the angle of the upper arm 342, the angle of a line B, which connects the lower ends of the front second curved rail 326a and the rear second curved rail 326b, is steeper than the angle of a line A, which connects the upper ends of the front second curved rail 326a and the rear second curved rail 326b.

Both the linear moving unit 320 and the curved moving unit 340 move vertically, but the upper and lower portions of the curved moving unit 340 have different travel distances. The lower portion of the curved moving unit 340 has a shorter vertical travel distance compared to the linear moving unit 320, but the lower portion of the curved moving unit 340 protrudes forward instead. On the other hand, the upper portion of the curved moving unit 340 may have a greater vertical travel distance than the linear moving unit 320.

Since the curved moving unit 340 performs both the vertical motion and rotational motion around a point where the curved moving unit 340 engages with the pinion gear 334, the vertical travel distances of the lower and upper parts of the curved moving unit 340 differ.

Therefore, the second curved rail 326 is designed with a convex shape extending outward toward the rear side by considering the differences in the movement paths of the linear moving unit 320 and the curved moving unit 340. The first curved rail 312 is formed on the vertical base 311 and is relatively long, while the second curved rail 326, which is formed on the moving plate 321 that moves in the vertical direction, is shorter than the first curved rail 312.

The front second curved rail 326a and the rear second curved rail 326b have different peak points P1 and P2 (or curvature points), where the peak point is the point where the second curved rail 326 protrudes toward the rear direction. If the peak point P1 of the front second curved rail 326a and the peak point P2 of the rear second curved rail 326b are identical, it may be difficult for the second guide protrusion 344 to change the direction (turn forward) and move when the second guide protrusion 344 reaches the peak points P1 and P2.

When the rear second guide protrusion 344b reaches the peak of the rear second curved rail 326b, the front second curved rail 326a is still moving downward. As a result, the rear second guide protrusion 344b may pass the peak point P2 of the rear second curved rail 326b and move along the rear second curved rail 326b, which is inclined forward at an angle.

As shown in FIG. 19, when the front second guide protrusion 344a reaches the peak point P1 of the front second curved rail 326a, the rear second curved rail 326b is still moving downward. The rear second curved rail 326b moves downward due to the downward force acting on the upper arm 342, and the front second guide protrusion 344a may continue moving downward along the front second curved rail 326a.

Additionally, the front second curved rail 326a has a greater curvature and a shorter distance between the upper and lower ends thereof, compared to the rear second curved rail 326b. In other words, the radius of curvature of the rear second curved rail 326b is larger than that of the front second curved rail 326a, and the length of the rear second curved rail 326b is longer than that of the front second curved rail 326a. This is because the movement path of the upper arm 342 differs between a part connected to the lower arm 341 and the other end.

When the second guide protrusion 344 reaches the lower end of the second curved rail 326, the first guide protrusion 343 also reaches the lower end of the first curved rail 312, completing the transition to the second state. In the second state, the angle of the upper arm 342 is steeper compared to the first state, while the lower arm 341 protrudes forward and is positioned at an angle, slanted from the vertical direction.

On the other hand, when the display unit 100 moves upward, the lower arm 341 moves upward, and the angle is changed. In addition, the upper arm 342 moves along the second curved rail 326 and pushes the moving plate 321 upward, allowing the upper part of the display unit 100 to move upward.

In this way, the driving force of the curved moving unit 340 may be directly transmitted to the linear moving unit 320 through the second curved rail 326, enabling the upward movement of the upper part of the display unit 100. This allows for more stable movement compared to a structure where the force is transmitted to the linear moving unit 320 through the display unit 100.

The present disclosure aims to provide the display device 10 capable of changing the position thereof. Specifically, the present disclosure aims to provide the retractable display device 10, which may be extended when needed and retracted when not in use, capable of reducing the size of the exposed screen.

Additionally, since the display device 10 of the present disclosure is capable of shape transformation, the display device 10 may be retracted and extended even when the storage space and the extraction direction do not align.

Due to a moving module that transmits the power of the motor 331, the lower curved motion and upper linear motion of the display unit 100, which are vertically synchronized, may be simultaneously performed through the power of a single motor 331.

Since the display device maintains rigidity even in a bent state, the display device allows for touch inputs and prevents reverse deformation, thereby ensuring durability.

The above detailed description should not be construed as being limitative in all terms, but should be considered as being illustrative. The scope of the present disclosure should be determined by reasonable analysis of the accompanying claims, and all changes in the equivalent range of the present disclosure are included in the scope of the present disclosure.

The following aspects are preferred embodiments of the present invention:
1. A display device comprising:
   a fixing unit;
   a moving unit movably coupled to the fixing unit and configured to transition from a first state to a second state;
   a driver comprising a pinion gear and a motor configured to provide a driving force to move the moving unit; and
   a display unit coupled to the moving unit and moving together with the moving unit, wherein the display unit comprises a variable portion that is flat in the first state and changes a curvature to a curved state in the second state,
   wherein the moving unit comprises:
      a linear moving unit coupled to an upper part of the display unit and configured to move vertically relative to the fixing unit; and
      a curved moving unit coupled to a lower part of the display unit and configured to protrude forward and downward by moving along a curved path during a transition from the first state to the second state,
      wherein the driver is configured to provide power to the curved moving unit, and
      wherein the curved moving unit is configured to transfer power to the linear moving unit.
2. The display device of aspect 1, wherein the curved moving unit comprises a lower arm coupled to the lower part of the display unit and extending upward,
   wherein a curved rack gear that engages with the pinion gear is formed on the lower arm, and
   wherein based on an operation of the pinion gear, an angle of the lower arm changes, and the lower part of the display unit protrudes forward.
3. The display device of aspect 2, wherein a front lower part of the lower arm is coupled to the lower part of the display unit, and
   wherein a rear side of the lower arm on which the curved rack gear is formed comprises a curved surface with a vertical center protruding outward in a rear direction.
4. The display device of aspect 2, wherein the fixing unit comprises:
   a horizontal base fixed to a floor;
   a vertical base extending vertically from the horizontal base; and
   a first curved rail formed on the vertical base, and
   wherein the curved moving unit comprises:
      an upper arm coupled to a top of the lower arm; and
      a first guide protrusion extending from the upper arm and configured to move along the first curved rail.
5. The display device of aspect 4, wherein the first curved rail comprises a front first curved rail and a rear first curved rail arranged in front and rear directions, respectively,
   wherein the first guide protrusion comprises a pair of first guide protrusions inserted into the front first curved rail and the rear first curved rail, respectively, and
   wherein a length of the rear first curved rail is greater than a length of the front first curved rail.
6. The display device of aspect 4, comprising a first straight rail formed on a front of the vertical base and extending in a vertical direction,
   wherein the linear moving unit comprises:
   a first front bracket coupled to an upper rear side of the display unit and configured to move vertically along a guide rail formed on the vertical base; and
   a moving plate coupled to the first front bracket and configured to move vertically.
7. The display device of aspect 6, further comprising a second curved rail formed on the moving plate and having a curvature point that protrudes rearward,
   wherein the upper arm is positioned between the vertical base and the moving plate, and
   wherein the upper arm comprises a second guide protrusion configured to move along the second curved rail.
8. The display device of aspect 7, wherein the second curved rail has a larger curvature than the first curved rail.
9. The display device of aspect 7, wherein the second curved rail comprises a front second curved rail and a rear second curved rail arranged in front and rear directions, respectively,
   wherein the second guide protrusion comprises:
   a front second guide protrusion inserted into the front second curved rail; and
   a rear second guide protrusion inserted into the rear second curved rail,
   wherein a length and a curvature radius of the rear second curved rail are greater than a length and a curvature radius of the front second curved rail, respectively.
10. The display device of aspect 9, wherein during the transition from the first state to
   the second state, the rear second guide protrusion already passes a curvature point of the rear second curved rail at a time when the front second guide protrusion reaches a curvature point of the front second curved rail.
11. The display device of aspect 6, comprising:
   a second straight rail formed on a rear of the vertical base and extending in the vertical direction; and
   a rear bracket coupled to the moving plate and configured to move vertically along the second straight rail.
12. The display device of aspect 4, wherein the upper arm is rotatably coupled to the lower arm.
13. The display device of aspect 1, wherein a pair of moving units are provided spaced apart in a horizontal direction,
   wherein the motor is positioned between the pair of moving units, and
   wherein the pinion gear is coupled to a pair of horizontal shafts extending from both sides of the motor and configured to receive power from the motor.
14. The display device of aspect 1, wherein the fixing unit comprises:
   a vertical base extending in a vertical direction; and
   a side rail formed on a front side of the vertical base, wherein a lower end of the side rail protrudes and extends forward, and
   wherein the display device comprises a guide hinge wing portion protruding from a rear side of the variable portion and configured to move along the side rail.
15. The display device of aspect 14, wherein a plurality of guide hinge wing portions are arranged in the vertical direction.
16. The display device of aspect 14, wherein a pair of vertical bases are provided in a horizontal direction,
   wherein the side rail is formed on opposite sides of the pair of vertical bases
   wherein a pair of guide hinge wing portions are formed symmetrically on left and right sides and coupled to a pair of variable portion guide rails.
17. The display device of aspect 1, wherein in the first state, the display unit is in a flat state, and
   wherein in the second state, the display unit is in a curved state in which a height is lowered and the lower part protrudes forward.

## Claims

1. A display device (10) comprising:
a fixing unit (310);
a moving unit (320, 340) movably coupled to the fixing unit (310) and configured to transition from a first state to a second state;
a driver (330) comprising a motor configured to provide a driving force to move the moving unit (320, 340); and
a display unit (100) coupled to the moving unit (320, 340) and comprising a variable portion (B) that is flat in the first state and changes to a curved state in the second state,
**characterized in that** the moving unit (320, 340) is configured to operate such that
an upper part (F1) of the display unit (100) moves along a first path, the first path is vertical relative to the fixing unit (310); and
a lower part (F2) of the display unit (100) moves along a second path different from the first path, during a transition from the first state to the second state.

2. The display device of claim 1, wherein the second path includes a downward movement and a forward protruding movement, and/or wherein the second path has a curvature.

3. The display device of any one of claims 1 to 2, wherein the display unit (100) is retracted in the first state and deployed in the second state.

4. The display device of any one of claims 1 to 3, wherein the moving unit (320, 340) comprises:
a linear moving unit (320) coupled to the upper part of the display unit (100) and configured to move vertically relative to the fixing unit (310);
a curved moving unit (340) coupled to the lower part of the display unit (100) and configured to protrude forward and downward by moving along the curved path during a transition from the first state to the second state,
wherein the driver (330) is configured to provide power to the curved moving unit (340), and
wherein the curved moving unit (340) is configured to transfer power to the linear moving unit (320).

5. The display device (10) of claim 4, wherein the driver (330) comprises a pinion gear (334),
wherein the curved moving unit (340) comprises a lower arm (341) coupled to the lower part of the display unit (100) and extending upward,
wherein a curved rack gear (341a) that engages with the pinion gear (334) is formed on the lower arm (341), and
wherein based on an operation of the pinion gear (334), an angle of the lower arm (341) changes, and the lower part of the display unit (100) protrudes forward.

6. The display device (10) of claim 5, wherein the fixing unit (310) comprises:
a vertical base (311) having
a first curved rail (312), and
wherein the curved moving unit (340) comprises:
an upper arm (342) coupled to the lower arm (341); and
a first guide protrusion (343) extending from the upper arm (342) and configured to move along the first curved rail (312).

7. The display device (10) of claim 6, wherein the first curved rail (312) comprises a front first curved rail (312) and a rear first curved rail (312) arranged in front and rear directions, respectively,
wherein the first guide protrusion (343) comprises a pair of first guide protrusions (343) inserted into the front first curved rail (312) and the rear first curved rail (312), respectively, and
wherein a length of the rear first curved rail (312) is greater than a length of the front first curved rail (312).

8. The display device (10) of claim 6, comprising a first straight rail formed on a front of the vertical base (311) and extending in a vertical direction,
wherein the linear moving unit (320) comprises:
a first front bracket (322) coupled to an upper rear side of the display unit (100) and configured to move vertically along a guide rail formed on the vertical base (311); and
a moving plate (321) coupled to the first front bracket (322) and configured to move vertically.

9. The display device of claim 8, further comprising a second curved rail (326) formed on the moving plate (321) and having a curvature point that protrudes rearward,
wherein the upper arm (342) is positioned between the vertical base (311) and the moving plate (321), and
wherein the upper arm (342) comprises a second guide protrusion (344) configured to move along the second curved rail (326).

10. The display device (10) of claim 9, wherein the second curved rail (326) comprises a front second curved rail (326) and a rear second curved rail (326b) arranged in front and rear directions, respectively,
wherein the second guide protrusion (344) comprises:
a front second guide protrusion (344a) inserted into the front second curved rail (326a); and
a rear second guide protrusion (344b) inserted into the rear second curved rail (326b),
wherein a length and a curvature radius of the rear second curved rail (326b) are greater than a length and a curvature radius of the front second curved rail (326a), respectively.

11. The display device (10) of claim 8, comprising:
a second straight rail (315) formed on a rear of the vertical base (311) and extending in the vertical direction; and
a rear bracket (323) coupled to the moving plate (321) and configured to move vertically along the second straight rail (315).

12. The display device (10) of any one of claims 1 to 11, wherein the display unit (100) is configured to provide a reduced exposed screen area in the first state and a larger exposed screen area in the second state.

13. The display device (10) of any one of claims 1 to 12, wherein the variable portion (B) is guided along a predetermined curved path during transition from the first state to the second state.

14. The display device (10) of claim 13, wherein the fixing unit (310) comprises:
a vertical base (311) extending in a vertical direction; and
a side rail (313) formed on a front side of the vertical base (311), wherein a lower end of the side rail (313) protrudes and extends forward, and
wherein the display device comprises a guide hinge wing portion (368) protruding from a rear side of the variable portion (B) and configured to move along the side rail (313).

15. The display device (10) of claim 14, wherein a pair of vertical bases (311) are provided in a horizontal direction,
wherein the side rail (313) is formed on opposite sides of the pair of vertical bases (311)
wherein a pair of guide hinge wing portions (368) are formed symmetrically on left and right sides and coupled to a pair of side rails (313).
